# FASCICULE DE BREVET EUROPEEN

(11) **EP 1 025 986 B1**
(45) Date de publication et mention de la délivrance du brevet: **19.04.2006**
(21) Numéro de dépôt: 00400196.2
(22) Date de dépôt: 26.01.2000
(51) Int. Cl.: B32B 17/10, C03C 27/12

(54) **Vitrage feuillete à tenue elevée aux crash-tests**
Verbundglas mit hohem Crashtest Wiederstand
Laminated glass with high crash-test resistance

(30) Priorité: 05.02.1999 FR 9901407
(43) Date de publication de la demande: 09.08.2000
(73) Titulaire: SAINT-GOBAIN GLASS FRANCE, 92400 Courbevoie (FR)
(72) Inventeur: Naoumenko, Yves, 45460 Bray en Val (FR); Colin, Emmanuel, 45600 Sully sur Loire (FR)
(74) Mandataire: Muller, René

(56) Documents cités:
- EP-A- 0 121 479
- EP-A- 0 915 315
- FR-A- 2 532 300
- US-A- 4 277 294

## Description

La présente invention concerne un type particulier de vitrages feuilletés, ayant de multiples applications notamment dans le bâtiment les véhicules de transport ou le mobilier urbain.

Ces vitrages peuvent être définis comme des empilements dont une partie au moins de la surface présente la transparence requise, et qui comprennent des feuilles reliées les unes aux autres au moyen de couches adhésives intercalaires, les bords de deux de ces feuilles au moins étant décalés l'un par rapport à l'autre.

Les vitrages feuilletés utilisés par exemple comme pare-brise de véhicule automobile, consistent le plus souvent en deux feuilles de verre collées par l'intermédiaire d'une couche adhésive de polyvinylbutyral (PVB). En général, le remplacement d'une feuille de verre monolithique par un vitrage feuilleté répond à des exigences bien connues de sécurité ; en effet, quand un pare-brise feuilleté se brise, les morceaux de verre restent collés sur l'intercalaire adhésif, et ainsi les projections d'éclats de verre, en particulier en direction des occupants, sont diminuées voire supprimées. D'autres structures feuilletées transparentes également bien connues, en général plus complexes et épaisses, sont par exemple destinées aux fonctions de blindage, anti-pénétration (protection des biens), protection ballistique (pare-balles, anti-éclats) ; en plus des matériaux cités précédemment, ces structures peuvent comprendre des feuilles de polymères tels que polyméthacrylate de méthyle (PMMA), polycarbonate (PC) et, en tant qu'adhésif, de polyuréthanne (PU).

Selon une particularité commune aux vitrages feuilletés de l'invention, les bords des deux de leurs feuilles constitutives au moins sont décalés l'un par rapport à l'autre. Les exigences auxquelles répond cette configuration sont de divers ordres. Le décalage des bords libère un espace en périphérie du feuilleté. Cet espace peut être mis à profit pour l'insertion de fonctions telles que moyens de connexion électrique pour réseaux de fils chauffants ou antenne ... Dans la plupart des formes de réalisations intéressantes de l'invention, le feuilleté présente un amincissement périphérique. Cette caractéristique permet de le monter affleurant dans une carrosserie profilée pour un montage également affleurant d'une feuille de verre monolithique d'épaisseur maximale pourtant inférieure. Ainsi est-il possible, dans la mise en forme des contours de baies d'une carrosserie, par emboutissage ou techniques similaires, de fixer initialement une profondeur uniforme pour la totalité du véhicule.

EP 915 315 décrit un feuilleté à résistance balistique, dont une feuille de verre extérieure déborde des autres, auxquelles elle est liée par du polyvinylbutyral. Le débord de cette feuille est recouvert de polyuréthane pour le collage d'une tôle.

EP 121 479 décrit un vitrage feuilleté dont une feuille de verre extérieure présente également un débord recouvert cette fois d'un émail ou d'une pâte sérigraphiée destinés à protéger le cordon adhésif d'une dégradation aux ultra-violets

Le décalage des bords d'au moins deux feuilles constitutives dans un feuilleté procure cependant une moins bonne tenue aux crash-tests. Ceux-ci consistent, de manière connue, à faire heurter un obstacle par un véhicule dans des conditions normalisées. La tenue d'un vitrage aux crash-tests est d'autant meilleure que celui-ci ne se désolidarise pas de son cadre sur une proportion importante de sa périphérie. Il importe en effet qu'en cas d'accident, le pare-brise feuilleté reste en place, maintenu autant que possible dans son cadre, offrant ainsi une certaine protection aux passagers vis-à-vis d'objets provenant de l'extérieur du véhicule.

La présente invention vise à améliorer la tenue aux crash-tests d'un vitrage feuilleté présentant par ailleurs au moins deux feuilles constitutives à bords décalés procurant les avantages exposés précédemment dans le domaine de la fabrication des carrosseries.

A cet effet, l'invention a pour objet un vitrage feuilleté comprenant au moins une première feuille et une seconde feuille reliées l'une à l'autre par une couche adhésive intercalaire, la première feuille étant débordante par rapport à la seconde, caractérisé en ce que la couche adhésive intercalaire s'étend sur une partie au moins du débord de la première feuille, et en ce que le débord de la couche adhésive intercalaire ainsi constitué est au moins en partie recouvert d'un élément intermédiaire apte à coller sur le vitrage ou ses éléments constitutifs et sur la carrosserie par l'intermédiaire d'une colle de montage. On constate que cette mesure permet de renforcer de manière parfaitement satisfaisante la liaison du vitrage à son cadre, en particulier dans les situations de chocs.

La première feuille est avantageusement en verre flotté, éventuellement trempé, recuit ou renforcé chimiquement, en fonction des propriétés souhaitées dans chaque application. Les propriétés essentielles mises à profit dans le choix du verre flotté sont les propriétés optiques et la rigidité.

Ces propriétés rendent l'emploi de ces matériaux tout aussi recommandable dans la constitution de la seconde feuille. Toutefois, celle-ci peut également être constituée de polymères transparents, tels que polycarbonate (PC) ou polyméthacrylate de méthyle (PMMA).

Les matériaux utilisables pour la couche adhésive intercalaire sont les adhésifs habituels dans ce type d'application. On citera l'emploi connu de polyvinylbutyral (PVB) quand la seconde feuille est en verre, et de polyuréthanne (PU) quand elle est en polycarbonate (PC), les polymères PVB et PC étant en effet peu compatibles.

La nature de la colle de montage est également usuelle ; on en citera comme exemple le polyuréthanne (PU).

Bien entendu, le vitrage feuilleté de l'invention peut de plus comprendre les couches ou empilements fonctionnels usuels : une couche hydrophobe/oléophobe ou hydrophile/oléophile, éventuellement photocatalytique et anti-salissures à l'extérieur, une couche ou un empilement réfléchissant, ou au contraire antireflet, un empilement à effet thermique, soit anti-solaire limitant la transmission de chaleur provenant du rayonnement solaire à l'intérieur d'un bâtiment ou d'un véhicule, soit bas-émissif limitant la transmission de chaleur stockée à l'intérieur d'un bâtiment ou d'un vehicule vers un extérieur froid, une couche de décor. Un réseau de fils conducteurs chauffants ou antenne est susceptible d'être noyé de manière connue au sein de la couche adhésive intercalaire ; un film semi-conducteur peut également être intercalé dans le feuilleté. Ce film semi-conducteur est par exemple constitué d'oxydes métalliques sous-stoechiométriques et/ou dopés tels que décrits dans la demande FR 2 695 117 : oxyde d'indium dopé à l'étain (ITO), oxyde de zinc dopé à l'indium (ZnO:In), au fluor (ZnO:F), à l'aluminium (ZnO:Al) ou à l'étain (ZnO:Sn) et l'oxyde d'étain dopé au fluor (SnO₂:F). A ce groupe de matériaux s'ajoute l'oxyde d'étain dopé antimoine (pentavalent ou tétravalent) SnO₂:Sb. Ces films semi-conducteurs peuvent être chauffants et utilisés pour le dégivrage et le désembuage ; ils présentent en outre des propriétés de réflexion dans l'infrarouge, notamment de basse émissivité.

De plus, des couches et feuilles supplémentaires peuvent être superposées à la surface libre de la seconde feuille. Il peut s'agir d'une simple feuille de polycarbonate ou d'un empilement dont la surface libre, après superposition à la seconde feuille, est constituée d'une telle feuille de polycarbonate. Cet empilement peut comprendre en outre par exemple une alternance de feuilles de verre et couches de PVB, ainsi qu'une couche de PU dont la fonction consiste en l'adhésion à la feuille de PC de la surface libre. Ce type de structure est employé à des fins de protection ballistique dans des feuilletés pare-balles et anti-éclats.

Selon un mode de réalisation préféré de l'invention, le débord de la couche adhésive intercalaire est totalement recouvert de l'élément intermédiaire. En effet, ce dernier a une fonction de protection de l'adhésif vis à vis des éléments avec lesquels il est susceptible d'entrer en contact, tels que l'eau.

De plus, l'adhésion de la colle de montage à l'adhésif est faible et/ou peu durable selon les cas, et le recouvrement de l'adhésif par l'élément intermédiaire permet d'y remédier en limitant, voire en supprimant l'interface colle de montage-adhésif.

L'invention comporte par ailleurs deux variantes relativement à une autre caractéristique : l'élément intermédiaire peut ou non pénétrer sous la seconde feuille. Le fait que l'élément intermédiaire pénètre sous la seconde feuille a pour conséquences une amélioration notable de la tenue du vitrage aux crash-tests, ainsi qu'une meilleure protection de l'adhésif vis-à-vis de l'eau et similaires, dans la région du bord de la seconde feuille. En revanche, la réalisation de cette configuration n'est pas des plus simples.

C'est pourquoi, il peut être préféré que l'élément intermédiaire ne pénètre pas sous la seconde feuille, d'autant qu'une tenue améliorée aux crash-tests, susceptible de satisfaire aux différentes règles d'agrémentation nationales, peut également être atteinte dans ces conditions.

Selon d'autres caractéristiques pouvant entraîner une amélioration de la tenue aux crash-tests :
- la contrainte en traction de l'élément intermédiaire, déterminée conformément à la norme ISO 527, est au moins égale à 10.000 MPa, de préférence à 15.000 MPa ;
- le collage de l'élément intermédiaire sur la couche adhésive intercalaire correspond à une mesure de l'essai de pelage à 90° d'au moins 5 daN/cm, de préférence d'au moins 7 daN/cm.

Avantageusement, l'élément intermédiaire est imperméable à l'eau vis à vis de laquelle il protège la couche adhésive ; à cette fin, la porosité du matériau qui le constitue correspond à une reprise en eau au plus égale à 30 g/jour/m², de préférence à 18 g/jour/m², lorsque ledit matériau se trouve sous forme d'une nappe de 3 mm d'épaisseur.

Deux modes de fixation du vitrage feuilleté de l'invention à la carrosserie sont préférés.

Selon le premier, la colle de montage est en contact avec la carrosserie d'une part, l'élément intermédiaire et la première feuille d'autre part. Autrement dit, la colle de montage est positionnée à la fois sur la partie du débord de la couche adhésive recouverte par l'élément intermédiaire et sur la face interne - orientée vers le coeur du vitrage feuilleté - du débord de la première feuille.

Selon le second mode de fixation, la colle de montage est en contact avec l'élément intermédiaire mais pas avec la première feuille.

Des matériaux s'avérant particulièrement appropriés pour constituer l'élément intermédiaire sont métalliques tels que l'aluminium, l'acier inoxydable, ou des résines du type époxy, phénolique, polyester insaturé contenant des charges de renforcement, par exemple des fibres de verre, fibres organiques, notamment fibres de carbone, de polyamide aromatique. Cependant, on choisit de préférence parmi ceux-ci des matériaux non-conducteurs d'électricité, notamment en présence d'accessoires fonctionnels électriques tels qu'un réseau de fils chauffants, afin de ne pas en perturber le fonctionnement.

Par ailleurs, l'invention a également pour objet l'application du vitrage feuilleté décrit ci-dessus en tant que pare-brise de véhicule automobile présentant une tenue élevée aux crash-tests.

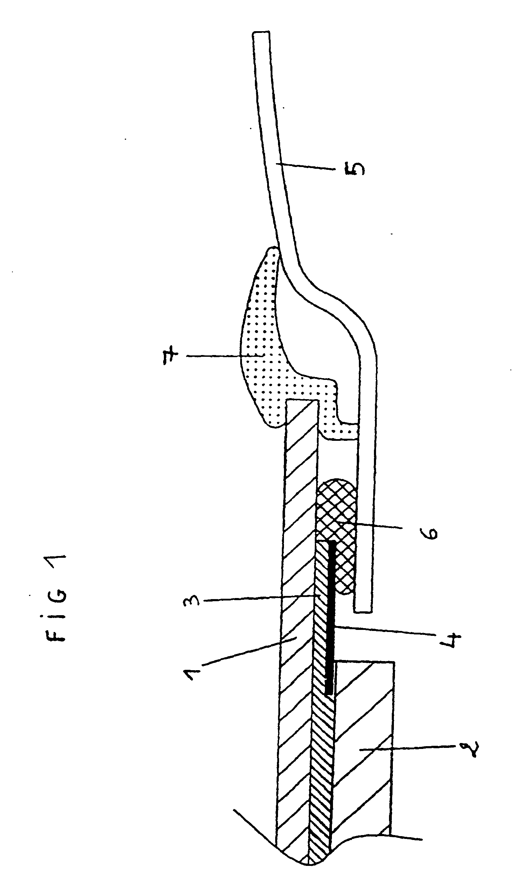

L'invention est maintenant illustrée en référence à la figure unique, qui est une représentation schématique en coupe partielle d'un vitrage feuilleté conforme à l'invention monté sur une carrosserie.

Le vitrage feuilleté comprend une première feuille de verre flotté (1) de 6 mm d'épaisseur et une seconde feuille (2) du même matériau, de 12 mm d'épaisseur. Les feuilles (1) et (2) sont reliées l'une à l'autre par une couche (3) de 1,14 mm d'épaisseur de PVB.

La feuille (1) est débordante par rapport à la feuille (2) et la couche (3) s'étend sur une partie du débord de la feuille (1).

Un élément intermédiaire (4) en résine époxy renforcée de fibres de verre, de 0,25 mm d'épaisseur, recouvre la totalité du débord de la couche (3) en pénétrant sous la seconde feuille (2).

La partie de l'élément intermédiaire (4) située sous la seconde feuille (2) est noyée dans la couche (3).

Le vitrage feuilleté est fixé à la carrosserie (5) au moyen d'une colle polyuréthanne (6) positionnée à la fois sur l'élément intermédiaire (4) et la face interne du débord de la première feuille (1).

Un joint d'etancheite et d'esthétique (7) en élastomère éthylène-propylène-monomère diénique (EPDM) recouvre le chant de la première feuille (1) et la surface de la carrosserie (5).

Selon une variante de ce mode de réalisation, une propriété pare-balles et anti-éclats est conférée à ce vitrage en remplaçant la seconde feuille (2) décrite ci-dessus par une feuille de verre flotté de 6 mm d'épaisseur, à laquelle on superpose une feuille de polycarbonate de 3 mm d'épaisseur, avec interposition d'une couche adhésive de polyuréthanne.

Les pare-brise ainsi formés ont beaucoup moins tendance, en cas d'accident, à se désolidariser de la baie de carrosserie à laquelle ils sont fixés, que les pare-brise comportant deux feuilles à bords décalés, mais par ailleurs non conformes à l'invention.

## Revendications

1. Vitrage feuilleté destiné à être adapté sur une carrosserie (5) et comprenant au moins une première feuille (1) et une seconde feuille (2) reliées l'une à l'autre par une couche adhésive intercalaire (3), la première feuille (1) étant débordante par rapport à la seconde (2), **caractérisé en ce que** la couche adhésive intercalaire (3) s'étend sur une partie au moins du débord de la première feuille (1), et **en ce que** le débord de la couche adhésive intercalaire (3) ainsi constitué est au moins en partie recouvert d'un élément intermédiaire (4) apte à coller sur le vitrage ou ses éléments constitutifs (3) et sur la carrosserie (5) par l'intermédiaire d'une colle de montage (6).

2. Vitrage feuilleté selon la revendication 1, **caractérisé en ce que** le débord de la couche adhésive intercalaire (3) est totalement recouvert de l'élément intermédiaire (4).

3. Vitrage feuilleté selon la revendication 1 ou 2, **caractérisé en ce que** l'élément intermédiaire (4) ne pénètre pas sous la seconde feuille (2).

4. Vitrage feuilleté selon la revendication 1 ou 2, **caractérisé en ce que** l'élément intermédiaire (4) pénètre sous la seconde feuille (2).

5. Vitrage feuilleté selon l'une des revendications 1 à 4, **caractérisé en ce que** la contrainte en traction de l'élément intermédiaire (4), déterminée conformément à la norme ISO 527, est au moins égale à 10.000 MPa, de préférence au moins égale à 15.000 MPa.

6. Vitrage feuilleté selon l'une des revendications 1 à 5, **caractérisé en ce que** le collage de l'élément intermédiaire (4) sur la couche adhésive intercalaire (3) correspond à une mesure de l'essai de pelage à 90° d'au moins 5 daN/cm, de préférence d'au moins 7 daN/cm.

7. Vitrage feuilleté selon l'une des revendications 1 à 6, **caractérisé en ce que** la porosité du matériau constituant l'élément intermédiaire (4) correspond à une reprise en eau au plus égale à 30 g/jour/m², de préférence à 18 g/jour/m², lorsque ledit matériau se trouve sous forme d'une nappe de 3 mm d'épaisseur.

8. Vitrage feuilleté selon l'une des revendication 1 à 7, **caractérisé en ce que** la colle de montage (6) est en contact avec l'élément intermédiaire (4) et la première feuille (1).

9. Vitrage feuilleté selon l'une des revendications 1 à 7, **caractérisé en ce que** la colle de montage (6) est en contact avec l'élément intermédiaire (4), mais pas avec la première feuille (1).

10. Vitrage feuilleté selon l'une des revendications 1 à 9, **caractérisé en ce que** l'élément intermédiaire (4) est métallique tel qu'en aluminium, acier inoxydable, ou constitué de résine du type époxy, phénolique, polyester insaturé contenant des charges de renforcement telles que fibres de verre, fibres organiques, notamment fibres de carbone, de polyamide aromatique.

11. Vitrage feuilleté selon la revendication 10, **caractérisé en ce que** l'élément intermédiaire (4) n'est pas conducteur d'électricité.

12. Application d'un vitrage selon l'une des revendications 1 à 11, en tant que pare-brise automobile à tenue élevée aux crash-tests.

## Patentansprüche

1. Verbundglasscheibe, die vorgesehen ist, in eine Karosserie (5) eingepasst zu werden und mindestens eine erste Scheibe (1) und eine zweite Scheibe (2) umfasst, die miteinander durch eine haftfähige Zwischenschicht (3) verbunden sind, wobei die erste Scheibe (1) über die zweite (2) vorsteht, **dadurch gekennzeichnet, dass** die haftfähige Zwischenschicht (3) sich über wenigstens einen Teil des Überstands der ersten Scheibe (1) erstreckt, und dass der so gebildete Überstand der haftfähigen Zwischenschicht (3) wenigstens teilweise von einem Zwischenelement (4) bedeckt wird, das in der Lage ist, über einen Montageklebstoff (6) auf die Verbundglasscheibe oder deren Bestandteile (3) und auf die Karosserie (5) geklebt zu werden.

2. Verbundglasscheibe nach Anspruch 1, **dadurch gekennzeichnet, dass** der Überstand der haftfähigen Zwischenschicht (3) vollständig von dem Zwischenelement (4) bedeckt wird.

3. Verbundglasscheibe nach Anspruch 1 oder 2, **dadurch gekennzeichnet, dass** das Zwischenelement (4) nicht unter die zweite Scheibe (2) reicht.

4. Verbundglasscheibe nach Anspruch 1 oder 2, **dadurch gekennzeichnet, dass** das Zwischenelement (4) unter die zweite Scheibe (2) reicht.

5. Verbundglasscheibe nach einem der Ansprüche 1 bis 4, **dadurch gekennzeichnet, dass** die gemäß der Norm ISO 527 bestimmte Zugspannung des Zwischenelements (4) mindestens 10 000 MPa und vorzugsweise mindestens 15 000 MPa beträgt.

6. Verbundglasscheibe nach einem der Ansprüche 1 bis 5, **dadurch gekennzeichnet, dass** die Klebeverbindung des Zwischenelements (4) mit der haftfähigen Zwischenschicht (3) einem Maß des Abziehversuchs bei 90° von mindestens 5 daN/cm und vorzugsweise mindestens 7 daN/cm entspricht.

7. Verbundglasscheibe nach einem der Ansprüche 1 bis 6, **dadurch gekennzeichnet, dass** die Porosität des das Zwischenelement (4) bildenden Materials einer Wasseraufnahme von höchstens 30 g/Tag/m² und vorzugsweise höchstens 18 g/Tag/m² entspricht, wenn dieses Material in Form einer 3 mm dicken Bahn vorliegt.

8. Verbundglasscheibe nach einem der Ansprüche 1 bis 7, **dadurch gekennzeichnet, dass** sich der Montageklebstoff (6) mit dem Zwischenelement (4) und der ersten Scheibe (1) in Berührung befindet.

9. Verbundglasscheibe nach einem der Ansprüche 1 bis 7, **dadurch gekennzeichnet, dass** sich der Montageklebstoff (6) mit dem Zwischenelement (4), aber nicht mit der ersten Glasscheibe (1) in Berührung befindet.

10. Verbundglasscheibe nach einem der Ansprüche 1 bis 9, **dadurch gekennzeichnet, dass** das Zwischenelement (4) aus einem Metall wie Aluminium bzw. rostfreier Stahl oder aus einem Harz vom Typ Epoxidharz, Phenolharz und ungesättigter Polyester, das verstärkende Füllstoffe wie Glasfasern und organische Fasern, insbesondere solche aus Kohlenstoff oder einem aromatischen Polyamid, enthält, besteht.

11. Verbundglasscheibe nach Anspruch 10, **dadurch gekennzeichnet, dass** das Zwischenelement (4) den elektrischen Strom nicht leitet.

12. Verwendung einer Verbundglasscheibe nach einem der Ansprüche 1 bis 11 als Kraftfahrzeugfrontscheibe mit erhöhter Festigkeit in Crash-Tests.

## Claims

1. Laminated glazing intended to be fitted to a bodywork (5) and comprising at least a first sheet (1) and a second sheet (2) which are joined together by an adhesive interlayer (3), the first sheet (1) protruding beyond the second (2), **characterized in that** the adhesive interlayer (3) extends over at least part of the overhang of the first sheet (1), and **in that** the overhang of the adhesive interlayer (3) thus formed is at least partially covered by an intermediate element (4) able to be bonded to the glazing or its constituent elements (3) and to the bodywork (5) using a mounting adhesive (6).

2. Laminated glazing according to Claim 1, **characterized in that** the overhang of the adhesive interlayer (3) is completely covered by the intermediate element (4).

3. Laminated glazing according to Claim 1 or 2, **characterized in that** the intermediate element (4) does not encroach under the second sheet (2).

4. Laminated glazing according to Claim 1 or 2, **characterized in that** the intermediate element (4) does encroach under the second sheet (2).

5. Laminated glazing according to one of Claims 1 to 4, **characterized in that** the tensile strength of the intermediate element (4), determined in accordance with the ISO 527 standard, is at least equal to 10 000 MPa, preferably at least equal to 15 000 MPa.

6. Laminated glazing according to one of Claims 1 to 5, **characterized in that** the bonding of the intermediate element (4) to the adhesive interlayer (3) corresponds to a 90° peel strength test of at least 5 daN/cm, preferably at least 7 daN/cm.

7. Laminated glazing according to one of Claims 1 to 6, **characterized in that** the porosity of the material of which the intermediate element (4) is made corresponds to a water uptake of at most 30 g/day/m², preferably 18 g/day/m² when the said material is in the form of a layer 3 mm thick.

8. Laminated glazing according to one of Claims 1 to 7, **characterized in that** the mounting adhesive (6) is in contact with the intermediate element (4) and with the first sheet (1).

9. Laminated glazing according to one of Claims 1 to 7, **characterized in that** the mounting adhesive (6) is in contact with the intermediate element (4) but not with the first sheet (1).

10. Laminated glazing according to one of Claims 1 to 9, **characterized in that** the intermediate element (4) is made of a metal such as aluminium or stainless steel, or is made of a resin of the following types: epoxy, phenolic, and unsaturated polyester containing reinforcing fillers such as glass fibres, organic fibres, particularly carbon fibres, or aromatic polyamide fibres.

11. Laminated glazing according to Claim 10, **characterized in that** the intermediate element (4) is not electrically conductive.

12. Application of glazing according to one of Claims 1 to 11 as a motor vehicle windscreen with good crash-test performance.
